# EUROPEAN PATENT APPLICATION

(11) **EP 3 232 377 A2**
(43) Date of publication of application: **18.10.2017**
(21) Application number: 17166534.2
(22) Date of filing: 13.04.2017
(51) Int. Cl.: G06K 19/077

(54) **CONTACTLESS DEVICES AND METHODS OF USE THEREOF**

(30) Priority: 15.04.2016 US 201615099885
(71) Applicant: On Track Innovations Ltd., 12000 Rosh Pina (IL)
(72) Inventor: Itay, Nehemya, 1225500 Beit Hillel (IL); Gazit, Nir, 2017900 Misgav (IL); Haroosh, Yaacov, 1796000 Kibbutz Hanaton (IL); Kaplun, George, 4032206 Kfar Yona (IL)
(74) Representative: Pearl Cohen Zedek Latzer Baratz UK LLP

(57) **Abstract**

A contactless user device for contactless communication with an external reader device includes an antenna loop that at least partially surrounds a hollow ferrite core, the hollow core including a ferrite wall that at least partially surrounds a space without ferrite. A circuit board is located within the space. The circuit board includes a contactless chip that is configured for contactless communication with the external reader device via the antenna.

## Description

### BACKGROUND

Smartphones and other personal electronic devices such as tablet computers may incorporate contactless communication capabilities (e.g. Proximity or Near Field Communication (NFC)). Such capabilities, which allow contactless communication with a compatible reader to transmit and receive data, for example, during a payment transaction, can be embedded in the personal electronic device or can be added by an external adapter that connects to the personal electronic device, e.g., as described in U.S. Patent Application Publication No. 2014/0027519, assigned to On Track Innovations Ltd. (OTI), and incorporated herein by reference in its entirety. Prior art solutions including the Contactless Payment and NFC Solution for Mobile Devices (COPNI), manufactured and sold by OTI, connect to the personal electronic device through contact and contactless data communication capabilities and standard subscriber identification module (SIM) capabilities using smart chips, such as the SmartMX P5CD080 of NXP Semiconductors N.V., as described in U.S. Patent No. 8,195,236, assigned to OTI, and incorporated herein by reference in its entirety. In this solution, an NFC antenna is connected to the contactless pins of the smart chip and the smart chip communicates with the smartphone via the contact communication pins.

There is a need in the art for, and embodiments of the invention include adapters for, enabling personal devices to switch from a contact communication mode to a contactless mode, e.g., over near field communication (NFC), to communicate with a contactless smart card reader via audio signals. There is a need in the art for, and embodiments of the invention enable, the use of such adapters with personal devices that connect via headset ports and that communicate via modulated audio signals. There is further a need in the art for, and embodiments of the invention enable, the use of such adapters with personal devices that do not have headset ports or without using their headset ports. There is further a need in the art, and embodiments of the invention enable, the use of such adapters with NFC controllers without an onboard secure element, for example, when the transaction security is performed elsewhere, for example by the personal device, a back-end server, or in the cloud (e.g., at a remote network-accessible device).

There is further a need in the art, and embodiments of the invention to provide devices that include antennas surrounding hollow magnetic cores that concentrate ambient electro-magnetic fields to enable a sufficiently compact device or antenna to have sufficient magnetic inductive coupling with NFC readers to communicate over NFC. To achieve sufficient magnetic inductive coupling for reliable NFC communication with NFC readers, current NFC devices, such as these adapters or other NFC devices, require relatively large antennas (e.g., approximately the size of a typical credit card, e.g., with an area of about 2500 mm²). There is a need in the art for, and embodiments of the invention provide, devices with antennas that magnify incoming radio frequency ("RF") magnetic fields to provide sufficient sensitivity and responsiveness while maintaining physical dimensions that are as small as possible, for example, for portability and comfort of use. These compact devices may be used as wearable technology, such as, wristbands or embedded in clothing.

### SUMMARY OF EMBODIMENTS OF THE INVENTION

Embodiments of the invention provide a device for contactless communication with an external reader device, the antenna of the device including a hollow ferrite core with a ferrite wall that surrounds a space without ferrite material. The antenna and ferrite wall may be arranged as two concentric loops, the antenna loop exterior to the ferrite loop, and both loops surrounding the non-ferrite space. Other components of the device may be located within that space. In some cases, the device may include a contact/contactless combi card and a jack to enable cable communication with a personal electronic device. In other cases, the device may include a contactless-only card and is configured for contactless communication only.

In one embodiment an adapter is disclosed for converting signals in a first format to signals in a second format, for enabling a personal electronic device such as laptop computer, tablet computer, smartphone and the like, to communicate with a contactless smart card reader via the device. In one embodiment, a single adapter may convert data from a contact format received from the personal electronic device (e.g., modulated audio signal format or universal serial bus (USB) format) into a contactless format (e.g., NFC) to be transmitted over an antenna to the contactless smart card reader. In another embodiment, a first adapter may convert data from a first contact format (e.g., USB format) to a second contact format (e.g., modulated audio signal format), and a second adapter may convert data from the second contact format (e.g., modulated audio signal format) to a contactless format (e.g., NFC) to be transmitted over an antenna to the contactless smart card reader.

In one embodiment an adapter is disclosed for enabling a personal electronic device to communicate with a contactless smart card reader via audio signals. The adapter may include a processor, a contact/contactless smartcard chip, an antenna and a power supply unit. The processor may be adapted or configured to exchange first data with said personal electronic device in a contact mode, wherein said first data is modulated on said audio signals, for example, over a headset jack, and to exchange second data with said smartcard chip, wherein said smartcard chip may be used to communicate said second with said contactless smart card reader via said antenna in a contactless mode.

In another embodiment an adapter is disclosed that includes a processor, a first communication connector to connect the personal electronic device to the processor, a second communication connector to connect the processor to the second adapter and a voltage regulator to regulate DC voltage received from said first communication connector and to regulate and provide it to said second communication connector, wherein the first communication connector is a universal serial bus (USB) connector, the first format of signals is compatible with USB signals requirements, the second connector is a headset connector and the second format supports exchanging data modulated over audio signals. The adapter further characterized in that the processor is adapted to exchange the data in the first format present at the USB connector with data in the second format present at the headset connector, and in that the second adapter is configured to exchange data with the first adapter using the second format.

Embodiments include an adapter for enabling a personal electronic device to communicate, via communication channel comprising data signals over universal serial bus (USB) channel with a contactless smart card reader. The adapter may include a processor, a contact/contactless smartcard chip, an antenna and a power supply unit, wherein said processor is adapted to exchange first data with said personal electronic device. The first data may be for example represented in a USB signal format (e.g., the data is transmitted according to the USB standard, for example via serial signals, with USB start or synchronization packets and end of packet sequences) present at the USB socket and may be further adapted to exchange second data with the smartcard chip wherein the smartcard chip is adapted to communicate with the contactless smart card reader via the antenna. According to some embodiments communication with the personal electronic device may be carried out via the audio channel of the personal electronic device.

In another embodiment an adapter is disclosed for enabling a personal electronic device to communicate, via at least one communication channel from a list comprising channel comprising data signals modulated over an audio channel and channel comprising universal serial bus (USB) data signals, with a contactless smart card reader. The adapter may include a processor, a near field communication (NFC) controller, an antenna, a headset audio plug, and a power supply unit. The processor may be adapted to exchange first data with the personal electronic device, wherein the first data is in one format from a list comprising data modulated on the audio signals present at the headset audio plug and data in USB signals format present at the USB connector and to exchange second data with the NFC controller. The NFC controller may be adapted to communicate with the contactless smart card reader via the antenna.

In any embodiment of user device according to the invention the contactless user device may be wearable.

A user device according to the invention may include a wireless module to enable wireless communication with the personal electronic device. The wireless module may be configured to enable Bluetooth low energy communication.

In devices or methods according to the invention the contactless communication may be near field communication.

In devices or methods according to the invention a personal electronic device may be connected via a connection cable to a jack of the user device. The connection cable may comprise a battery.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

Fig. **1A** is a schematic high-level block diagram of an adapter according to an embodiment of the present invention;

Figs. **1B** and **1C** schematically illustrate physical and electrical components placement, in a three dimensional (3D) isometric view, of an adapter with and without its external package, respectively, according to an embodiment of the present invention;

Fig. **2** schematically illustrates an adapter for enabling a personal device to function as a contact/contactless smart card, according to an embodiment of the present invention;

Fig. **3** schematically presents an adapter for enabling communication between personal electronic device and smart card reader using a Near Field Communication (NFC) controller for controlling the contactless communication, according to an embodiment of the present invention;

Figs. **4A, 4B** and **4C** schematically illustrate packaging of an adapter, the adapter without its casing and the casing, respectively, according to an embodiment of the present invention;

Figs. **5A**, **5B** and **5C** schematically illustrate a compact antenna arrangement in an adapter in partial isometric view, top view and full isometric view, respectively, according to an embodiment of the present invention;

Fig. **6A** schematically illustrates an exploded view of a compact contactless device in accordance with an embodiment of the present invention;

Fig. **6B** schematically illustrates a connector set with integrated battery for connecting the compact contactless device shown in Fig. **6A** to a personal device;

Fig. **6C** schematically illustrates components of a compact contactless device without an internal power source, in accordance with an embodiment of the present invention;

Fig. **6D** schematically illustrates components of a compact contactless device with an internal power source, in accordance with an embodiment of the present invention; and

Fig. **7** schematically illustrates components of a compact contactless-only device, in accordance with an embodiment of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF EMBODIMENTS OF THE INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

Typical contactless smart cards comprise electronic circuitry, including active units, such as controllers/microprocessors and passive units, such as an NFC antenna. Some electronic circuitry for contactless smart cards may be able to operate in two modes: contact mode and contactless mode. In contact mode, the electronic circuitry may be powered by energy received via contacts from the host device. In contactless mode, the electronic circuitry may be passively activated, for example, powered by RF energy received at the NFC antenna energized from an external device.

Embodiments of the invention include contactless devices acting as contactless adapters for enabling communication between personal devices, such as smart phones, tablet computers, laptop computers and the like and contact/contactless readers. These contactless adapters are adapted to communicate with the personal device via the headset socket of the personal device, using the signals in the voice range on which data and control signals are modulated. Embodiments of the invention also provide adapters for personal devices that do not have a standard headset socket, or that do not require the use of the standard headset socket. In one embodiment, a USB adapter is used to connect from a universal serial bus (USB) connector (physically and electrically) of the personal device to a headset jack of the contactless adapter. That is, a USB adapter is configured to connect with a personal device via the USB port of the personal device, to receive via the USB port controls, data and electrical power, and to convert these to controls, data and power, modulated and appended to standard signals for transfer via the headset port. Alternatively the contactless adapter can be fitted with a USB connector, allowing it to communicate directly via USB channel with the personal device.

In accordance with an embodiment of the present invention, the size of a contactless device (e.g., an NFC device) that is configured to communicate with an external contactless reader (e.g., NFC reader) may be reduced by providing a more compacted antenna arrangement for increased portability and convenience of the user. Efficiency of magnetic coupling of such a compact contactless device with the external reader device may be maintained, despite the small physical dimensions of the contactless device antenna, by providing a hollow ferrite core that surrounds a central opening or void within which various electronic components may be located. The size of the device may be reduced while still maintaining sufficiently large magnetic inductive coupling with the NFC reader.

Typically, wired communication with the personal device occurs relatively infrequently as compared to contactless communication. Therefore, the contactless device need not include a male plug to enable convenient (e.g., without use of an external connector) connecting to the personal device. Rather, when wired communication with the personal device is required, a separate connector cable may be connected to the contactless device and to the personal device. The ends of the connector cable may be provided with male plugs. Therefore, the contactless device may include only a simple female headset jack or similar socket. Thus, further compactness (relative to a contactless device that includes a male plug) may be achieved.

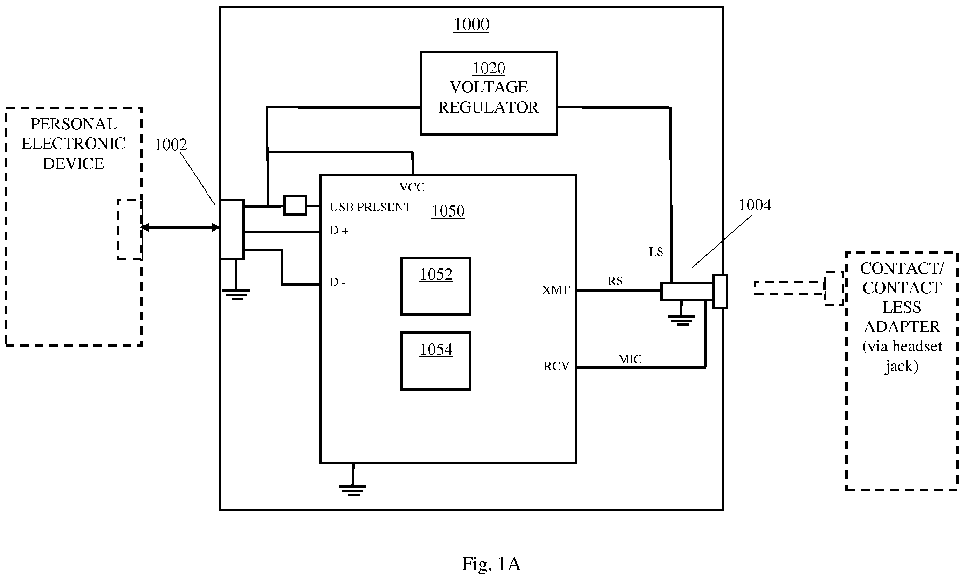

Reference is made to Fig. **1A** which is a schematic high-level block diagram of a USB adapter 1000 according to an embodiment of the present invention. Adapter 1000 is configured to communicate with a personal device via a first port or socket supporting signals according to a first format, such as a USB port, connector or socket supporting USB signals, and with a contact/contactless adapter via a second port or socket supporting signals in a second format, such as a headset port, plug or socket supporting data modulated on audio signals, and to convert signals received from the first port, e.g. USB, to signals conforming with the second port and second format, e.g. headset signals, and vice versa. Adapter 1000 may comprise USB communication connector 1002 adapted to connect to pins D+, D-, GND and USB +V supply signals of a personal device. Adapter 1000 may further include controller 1050 configured to communicate with a personal device via USB communication connector 1002 and with a contact/contactless adapter via headset communication connector 1004. Controller 1050 may be configured to convert signals from contact/contactless adapter to personal device and vice versa. Controller 1050 may be any suitable processor, microprocessor, microcontroller and the like. Controller 1050 may include non-transitory storage means 1052 for storing programs and parameters (which when executed cause controller 1050 to carry out embodiments of the present invention) and non-transitory storage means 1054 for storing data. Adapter 1000 may include voltage regulator 1020 for receiving power supply from the personal device via USB communication connector 1002 and converting it to voltage level adapted to feed the contact/contactless adapter via, for example, its left stereo (LS) line. Controller 1000 may be configured to be responsive to the connection/disconnection of adapter 1000 from the USB connection by means of a "USB Present" signal connected to one of the input pins of controller 1050 and, for example, change the state of controller 1050 from a low-activity state (such as "dormant") to a normal activity state, and vice versa. Controller 1050 and other controllers described herein may be configured to carry out embodiments of the invention for example by executing software or instructions which cause the controller to carry out embodiments of the present invention, or for example by having dedicated or hard-wired circuitry.

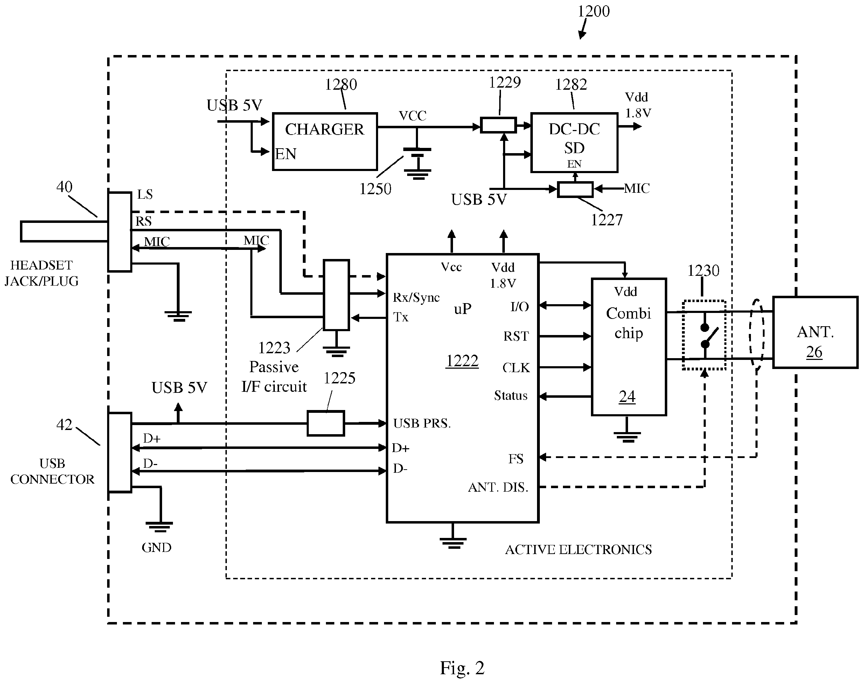

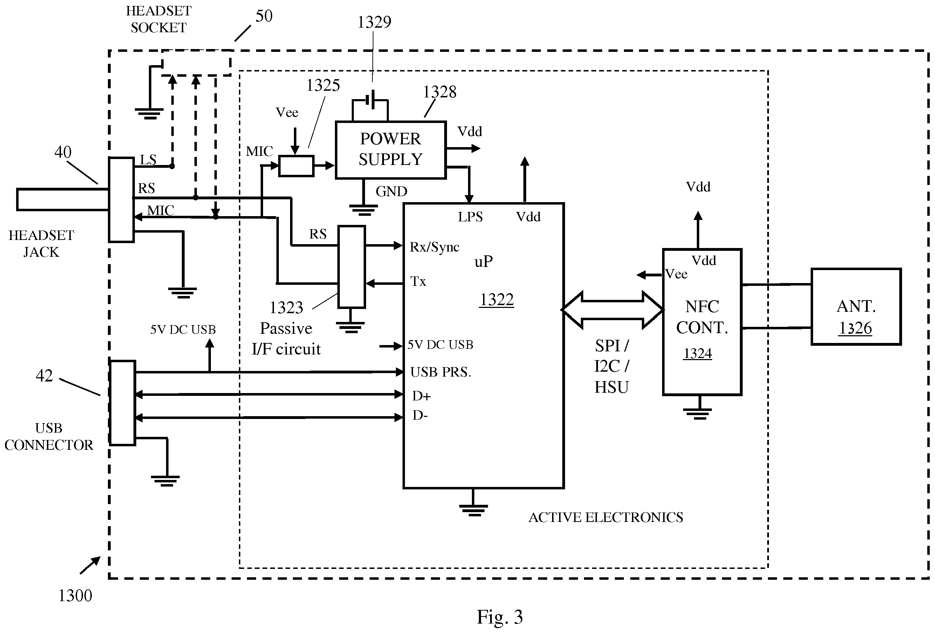

Programs stored and running on the personal device may communicate with a smart card reader adapter, such as contact/contactless adapter 1200 (Fig. 2) and contact/contactless adapter 1300 (Fig. 3) via USB adapter 1000, for example by the assistance of programs stored and running on USB adapter 1000 which assist in converting the signals and the communication received at the USB connector to those presented at the headset socket and vice versa.

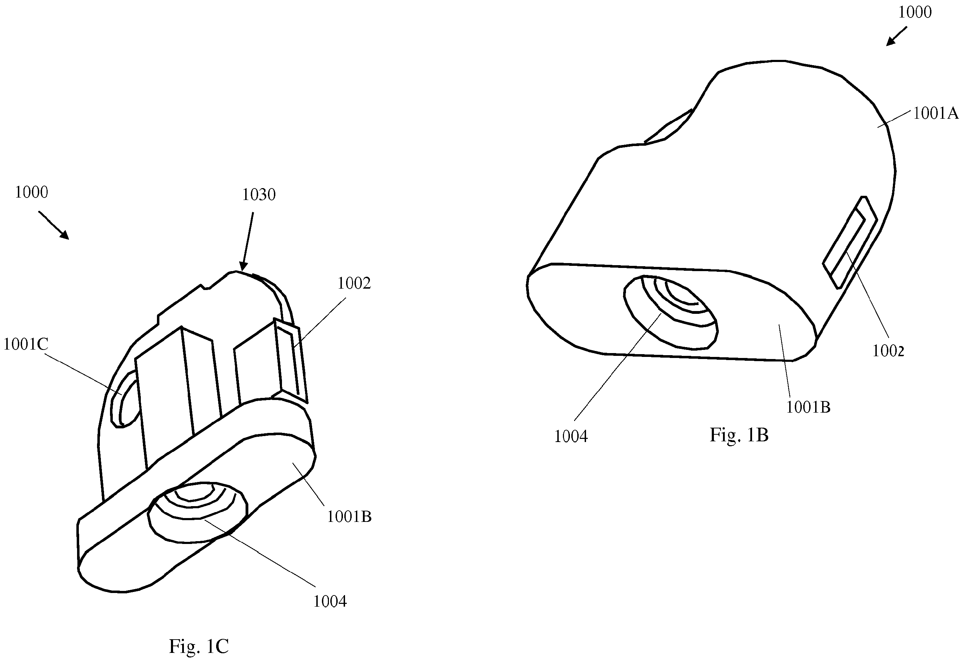

Reference is made now to Figs. **1B** and 1C which schematically present physical and electrical components placement, in 3D isometric view, of USB adapter 1000 with and without its external package, according to an embodiment of the present invention. Adapter 1000 may comprise external package cover 1001A and 1001B which together form a closed package for adapter 1000 with two communication sockets in it. USB communication connector 1002 and headset communication connector 1004 are built to enable connection of a USB plug in USB communication connector 1002 and of a headset jack in headset communication connector 1004. Board 1030 may be used to place all electronics components as well function as electrical and mechanical connecting unit communication connectors 1002 and 1004. Adapter 1000 may be configured with a hole 1001C made in it for example in order to allow attaching the adapter to a key ring. Because adapter 1000 is used to connect an electronic device having a USB port with a contact/contactless smart card adapter, adapter 1000 may be powered from the power supply pin in a USB plug/ socket/ connector. In some embodiments no other power source may be required.

Reference is made to Fig. **2****,** which schematically illustrates a contact/contactless adapter 1200 for enabling a personal device to function as a contact/contactless smart card, according to an embodiment of the present invention. Adapter 1200 may comprise processor unit 1222, contact/contactless smartcard chip 24 ("combi chip"), RF antenna 26, power supply unit 28, passive interface circuit 23, headset jack 40 and USB connector 42. Processor unit ("uP") 1222 may be any suitable processor, microprocessor (uP), controller, microcontroller and the like. Combi chip 24 may be any chip adapted or configured to provide and support contactless communication via antenna, such as antenna 26 and contact communication via dedicated pins on it. RF antenna 26 may be any suitable antenna complying with contactless requirements, such as according to ISO 14443 standard. According to some embodiments chip 24 may include Smart Card functionality. Processor 1222 may be configured or adapted to carry out methods according to the present invention, for example by executing software.

Headset jack 40 may be any standard stereo headset jack such as the 3.5 mm stereo jack supporting two audio channels out (LS and RS) and one audio channel in (MIC).

Audio channel out RS and audio channel in MIC may form a two way communication channel for uP 1222, via passive interface 1223, to communicate with any personal electronic device connected to headset jack 40 over an audio channel. Audio channel LS may be routed to uP 1222 to provide synchronizing (sync) signal for the communication. Alternatively the same speaker channel which provides data-in from the personal electronic device, for example RS, can be used to provide both the data signal and the sync signal to uP 1222 (not shown in Fig. 2). The data exchanged between the personal electronic device and uP 1222 via headset plug 40 may include numerical or textual information, value of parameters, control data and the like, as may be required to satisfy the communication between program or programs running on the personal electronic device and program or programs running on uP 1222. This data may be represented by digital electronic signals modulated on audio signals, where the audio signals are compatible with standard requirements applicable to audio channels for playing audio signals to headsets and receiving audio signals from the headsets.

When adapter 1200 is connected to personal electronic device via USB connector 42, data between the personal electronic device and uP 1222 may be exchanged via differential data lines D+, D- as is the case in USB channels. The data exchanged between the personal electronic device and uP 1222 via USB connector 42 may include numerical or textual information, value of parameters, control data and the like, as may be required to satisfy the communication between program or programs running on the personal electronic device and program or programs running on uP 1222. This data may be represented by electronic signals conforming to the USB communication format.

Adapter 1200 may be powered by battery unit 1250, which may be a battery, a rechargeable battery and the like. Optionally adapter 1200 may comprise charger 1280 that may be powered from the 5V line of a USB socket, when adapter 1200 is connected to a USB port of a personal electronic device. Charger 1280 may be controlled by the presence of 5V from USB connection, so that is it activated only when 5V DC from USB connector 42 is present.

Adapter 1200 may further comprise DC-DC step-down converter 1282 configured to convert input voltage of for example approximately 5V DC to for example approximately 1.8V DC which serves as the main operating supply power for uP 1222. Other specific voltages may be used. Vcc input to uP 1222 may support its internal USB interface. Converter 1282 may be controlled by the presence of a 5V DC signal from USB connector 42 and a MIC DC portion signal, or via combiner unit 1227. The presence of either will enable converter 1282. Converter 1282 may be powered from battery unit 1250 in the absence of 5V DC from USB connector 42 or from 5V DC line from USB connector 42 when it is present.

Passive interface circuit 1223 may comprise, for example, resistors and capacitors (not shown), and may be used to mutually adapt and match the amplitudes and DC levels of the signals exchanged between uP 1222 and a personal electronic device to which adapter 1200 is connected via its earphone headset socket.

uP 1222 may be adapted or configured to communicate with the personal electronic device by receiving audio signals modulated with digital data and/or instructions from RS line. uP 1222 may be further adapted to modulate audio signal with data and send the modulated audio signal over the audio in channel MIC to the personal electronic device. uP 1222 may be adapted to use the audio signal over RS also as a synchronization signal for its data transmission to the personal electronic device. In an alternative embodiment, the LS line may be used instead of the RS line for transmitting modulated data from the personal electronic device to the USB adapter and optionally also for synchronizing transmission to the personal electronic device.

uP 1222 may further be adapted to communicate with combi chip 24 via pins on both uP 1222 and combi chip 24, utilizing bi-directional input/output (I/O) data channel with combi chip 24, providing power (Vdd), clock (CLK) and reset (RST) signals to combi chip and receiving status signal from combi chip 24 thus enabling ON/OFF control in contact mode of combi chip 24 from uP 1222. The two way input/output (I/O) channel allows sending and receiving data and/or instructions between uP 1222 and combi chip 24.

Combi chip 24 may be a standard dual mode contact / contactless smart card IC chip, adapted to support communication in both modes, such as the P5CD080 chip provided by NXP Semiconductors N.V. Combi chip 24 may be of a kind that does not allow concurrent communication in contact and in contactless modes. In such embodiments a mechanism is provided to control and guarantee proper switching between the modes of operation of combi chip 24.

In order to control and coordinate the operation of combi chip 24 in its contact / contactless modes of operation, an antenna control unit 1230 may be provided, connected between combi chip 24 and RF antenna 26 and adapted to enable/disable the flow of RF signals between RF antenna 26 and combi chip 24. According some embodiments of the present invention control unit 1230 may prevent RF signals picked by antenna 26 from reaching combi chip 24 by, for example, shorting of the RF signals picked up by antenna 26. Antenna control unit 1230 may be controlled by a signal, such as signal ANT DIS, provided by uP 1222. Antenna control unit 30 may be embodied in any known way and preferably by using electronic switches (e.g., diodes, transistors, or any other controllable semiconductor shorting device or method). Coordination mechanism for the modes of operation of combi chip 24 may further comprise field sense (FS) signal produced by RF antenna 26 and provided to uP 1222. FS signal may be, for example, 'true' only when an RF signal of high enough level is sensed by RF antenna 26. According to an embodiment of the present invention signal FS may be provided when RF field is sensed regardless of the status of switch 30.

With combi chip 24 which supports concurrent activation of both contact and contactless modes of operation, field sense signal may alternatively be manifested by using the uP 1222 Vcc pad as an input, sensing the voltage level at Vcc pad of combi chip 24, or by sensing the voltage level at the status pad of combi chip 24 (require software support in combi chip 24).

When there is no signaling of presence of power on MIC line from headset jack 40 or 5V signaling from USB connector 42 or signal via antenna 26 in the form of RF signals, adapter 1200 is in an "off' state. Power may be supplied to adapter 1200 and communication may be initiated with adapter 1200 by either a user of the personal electronic device connecting the adapter to the personal electronic device (e.g., by invoking an application program at the personal electronic device that activates adapter 1200 and initiates communication between the personal electronic device and uP 1222 and, via uP 1222, enabling combi chip 24 to communicate in contact mode), or by an external contactless smart card reader activating the adapter (e.g., by exposing adapter 1200 to an RF field of an external contactless smart card reader sensed by RF antenna 26, enabling adapter 1200 to perform contactless communication session). In some embodiments, for contactless mode communication with combi chip 24, no power may be supplied by power supply unit 28 when all the power that is needed for processing and communication is provided via the received RF signal from the external contactless smart card reader.

Adapter 1200 may be in one of several modes of operation, dictated by the combi chip 24 based on a combination of factors including the power sources provided to adapter 1000 from a received RF signal, from a personal electronic device connected to adapter 1000 via headset jack 40 or from power supply pin of a USB plug connected via USB connector 42, and by the timing of their appearance/disappearance with respect to each other. When adapter 1200 is in an "off' state (and as a result combi chip 24 is in an off state) and communication in contact mode, either via headset jack 40 or USB connector 42, is first to be initiated, uP 1222 may wake up/resume operation and, intending to communicate with Combi-chip 24, issue an ANT DIS signal which may prevent subsequent RF signal received by RF antenna 26 from reaching to combi chip 24 while operating in contact mode, for example by shorting this RF signal. This may be performed, for example, by controllable switch 30 which is, e.g., normally open. When controllable switch 30 receives signal ANT DIS, switch 30 may close and short the antenna terminals. This is done to avoid attempts to concurrently activate combi chip 24 in both contact and contactless modes. This functionality is especially important for combi chips which do not support concurrent activation of both contact and contactless modes of operation. The operation of adapter 1000 in this contact mode may continue as required. When this contact mode session ends, uP 1222 may turn signal ANT DIS off thus removing the short over RF antenna 26 terminals, enabling subsequent contactless operation in the presence of RF field. In this case FS signal turns TRUE, which in turn may cause uP 1222 to wait with any further contact communication sessions until FS signal becomes FALSE again, indicating the removal of the RF field, or the removal of the adapter along with the personal electronic device it is connected to away from the RF field. Alternatively uP 1222 may force activation of switch 30 while FS is still true so as to force ending of the contactless operation in order to allow contact operation. In case where combi chip 24 can support concurrent contact-contactless operation, switch 30 may not necessarily be required. These manners of switching back and forth between contact and contactless modes of operation, may be for example part of a multi stage operation in which a contactless mode has been initiated in order to, for example, perform a money transaction, and user input is required as part of the operation. In such event, when the user's input is required, adapter 1000 may be taken out of the RF field thus enabling switching to contact mode to enable the entry of user's input to be transferred to combi chip 24. According to this example, once the user finishes entering the input the adapter may be brought closer to the contactless smart card reader thus causing an RF field to be sensed by antenna 26 enabling initiation of contactless mode session. According to another embodiment the contact mode session may terminate, for example, by the termination of the powering audio signal, for example due to a respective command issued by the program that activated that mode.

Activation of the adapter and communication in contact mode as a result of input from the user of the personal electronic device may be enabled by a program running or being executed on the personal electronic device which may cause issuance of a signal on RS line which will activate uP 1222 via Rx/Sync pin in addition to activating its power supply via the MIC signal, or, if adapter 1200 is connected to a personal electronic device via USB port, a 5V signal may, in addition to activating its power supply, be issued at a USB PRESENT pin, to activate uP 1222 USB communication channel and communicate with the personal electronic device

Communication in contact mode may enable transfer of data between combi chip 24 and uP 1222, such as data associated with a transaction that was carried out previously in contactless mode, and transfer data between uP 1222 and the personal electronic device via audio channels RS and MIC when connected via headset jack 40, or via D+ / D- lines when connected via USB connector 42. Such data from combi chip 24, or portion of it, may be presented to the user of the personal electronic device. If response or input from the user is required for the operation of adapter 1200, or for the transaction performed by it, this data may be exchanged between the personal electronic device and uP 1222 via RS and MIC channels when connected via headset jack 40, or via D+ / D- lines when connected via USB connector 42, and then provided to combi chip 24. The types of data that may be exchanged between adapter 1200 and the personal electronic device are data indicative of the performed operation / transaction by adapter 1200, such as paid sum, details of purchased items, etc. Once this data exchange is finished and antenna disable signal ANT DIS is deactivated, uP 1222 may check the status of the FS signal and if "false" may report it back to personal electronic device which may return adapter 1200 to the off state until further initiation of power and communication to adapter 1200.

When adapter 1200 is in the "off' state and RF signals are received in RF antenna 26, adapter 1200 switches to contactless mode of operation of combi chip 24. In such a case uP 1222 remains dormant unless it is activated by the personal electronic device. In such case the presence of signal FS will signal uP 1222 to prevent any attempt to switch adapter 1200 into contact communication mode. In such case switch 1230 may remain open, and is not closed by uP 1222, so that the RF signal received from RF antenna 26 is presented to and energizes combi chip 24, and communication in contactless mode proceeds. Once the communication in contactless mode terminates, adapter 1200 may return to the "off' state until further initiation of communication. When adapter 1200 is in contactless communication mode, no contact communication is permitted in adapter 1200 between uP 1222 and combi chip 24. In embodiments where the combi chip 24 allows concurrent communication in both contact mode and contactless mode, the above limitation may not be necessary or be applied. As described above a typical use of adapter 1200 may include several segments along the time axis in which after contactless session has been established and a transaction that takes place during the contactless session requires an input from the user, the contactless mode may terminate in order to enable establishing of contact mode communication. After the data transaction in contact mode ends, the adapter 1200 may terminate the contact mode session to enable reactivating of a contactless mode to enable conveying, for example, the user's input to the contactless smart cards reader. In other embodiments an application running on the personal electronic device may cause intentional termination of a contactless mode session of adapter 1200 in order, for example, to enable entering into a contact mode session. Data indicative of the performed transaction may be stored in combi chip 24 and may be sent to the electronic personal device via uP 1222 after adapter 1200 terminates its contactless communication.

Reference is made now to Fig. 3, which schematically illustrates an adapter 1300 for enabling communication between personal electronic device and smart card reader using a Near Field Communication (NFC) controller for controlling the contactless communication, according to an embodiment of the present invention. Adapter 1300 may comprise headset jack communication connector 40 connecting lines RS and MIC, and optionally LS, to uP 1322, similar to corresponding lines in Fig. **2****.** Optionally, adapter 1300 may comprise USB communication connector 42. Data between the personal electronic device and uP 1322 exchanged via USB communication connector 42 may be exchanged via lines D+, D- as is the case in USB channel. 5V DC signal may further be provided to uP 1322 at pin USB PRS to signal presence of a USB communication connection. The data exchanged between the personal electronic device and uP 1222 via USB connector 42 may include numerical or textual information, value of parameters, control data and the like, as may be required to satisfy the communication between program or programs running on the personal electronic device and program or programs running on uP 1222. This data may be represented by electronic signals conforming to the USB communication format. Supply of 5V DC power from USB communication connector may be used to provide power to power supply unit 1328 adapter and optionally to recharge battery 1329. Powering of power supply 1328 by 5V DC from USB communication connector may be embodied similarly to the arrangement described in reference to Fig. **2****.**

Adapter 1300 may optionally comprise headset socket 50 adapted to enable connection of a user's headset. Antenna 1326 may be connected to NFC controller 1324. NFC controller 1324 may communicate with uP 1322 according to a protocol such as SPI (Serial Peripheral Interface) or I²C (Inter Integrated Circuit) or HSU (High Speed UART). Adapter 1300 may be powered from battery 1329 and via power supply unit 1328. Power supply 1328 may be enabled by the DC portion of the signal in MIC line, by the presence of 5V DC USB (similar to the arrangement described with respect to Fig. 2) and by Vee DC voltage produced by NFC controller 1324 when antenna 1326 is exposed to an RF field. Combiner 1325 may combine the voltages to power supply 1328. Other basic functionalities of adapter 1300 operate similarly to those of adapter 1200. Yet, in some embodiments, NFC controller 1324 may not contain secured element (SE) as is common in combi chips such as combi chip 24 (Fig. **2**). In such circuitry the securing of the communication and the data transactions may be assigned to the personal electronic device.

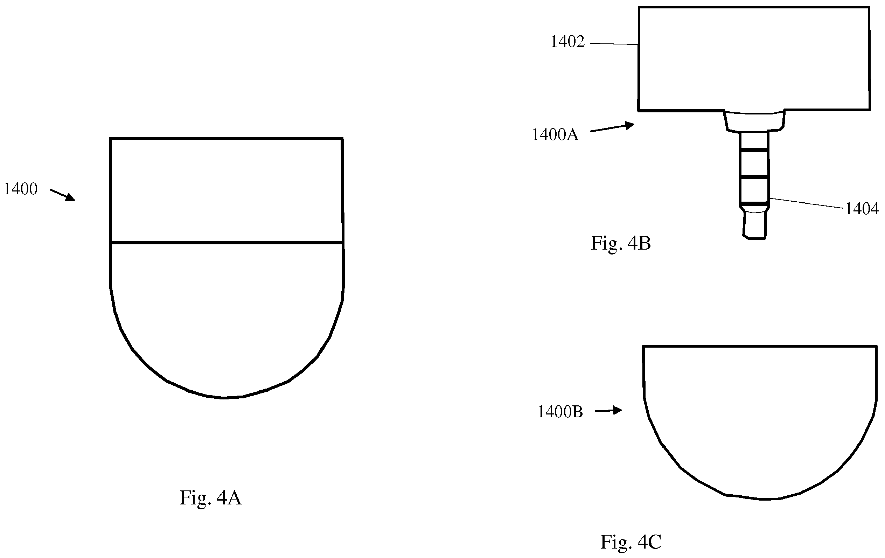

Reference is made to Figs. **4A, 4B** and **4C**, which schematically illustrate the packaging of an adapter, the adapter without its casing and the casing, respectively, according to an embodiment of the present invention. Adapter for enabling communication between a personal electronic device and a smart card reader, such as adapters 1000, 1200 or 1300, may be packed in a package 1400 which may comprise the adapter itself 1400A and a case 1400B to cover and protect the headset jack. Adapter 1400A may comprise electronic and antenna portion 1402 and headset jack portion 1404. When headset jack 1404 is fully inserted into a cavity in cover 1400B it is fully enclosed and protected and the engaged elements 1400A and 1400B form a nicely designed small unit that may be connected, for example, tied to a key ring.

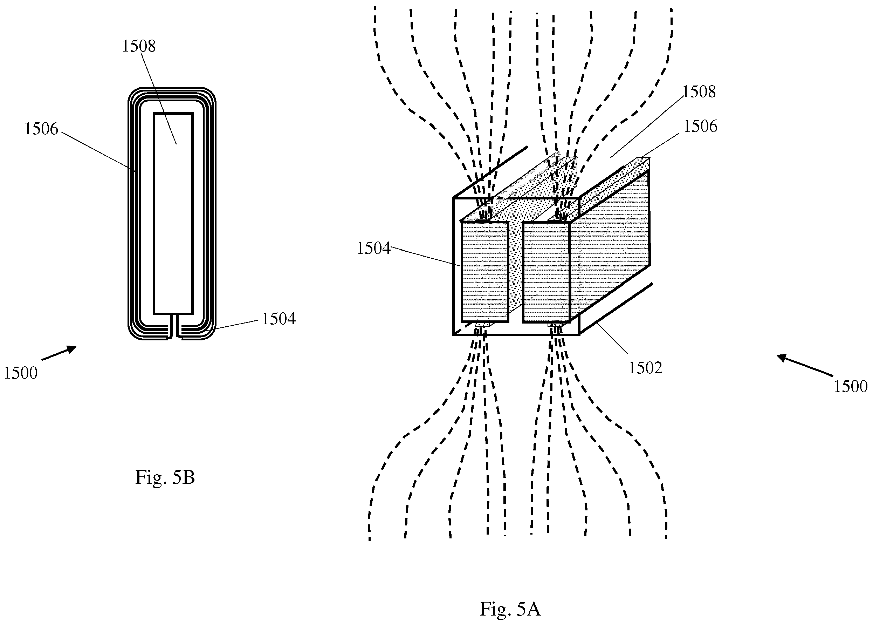

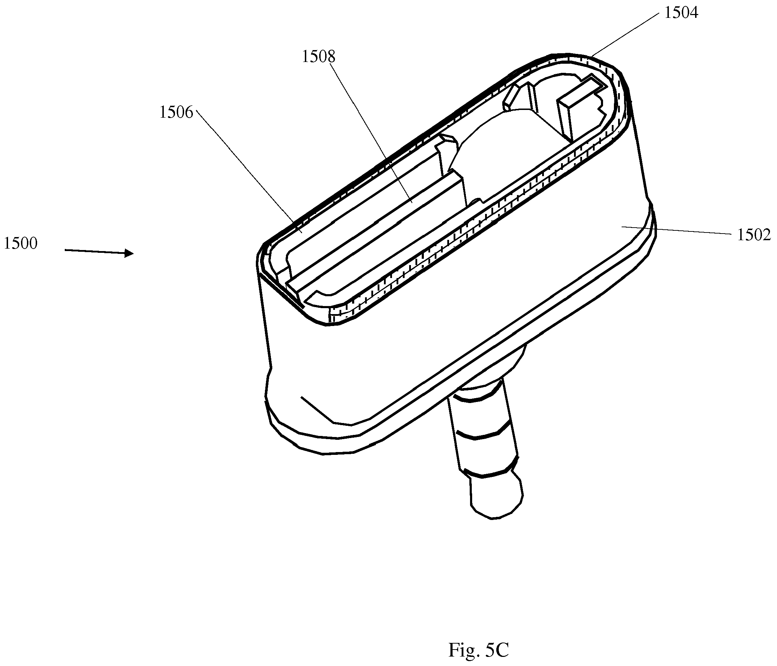

Reference is made to Figs. **5A**, **5B** and **5C**, which schematically illustrate the compact antenna arrangement 1500 of a contactless device in the form of an adapter in a partial isometric, partially transparent view, top view and full isometric view, respectively, according to an embodiment of the present invention. To condense the elements of a contactless device, such as contact-contactless adapters 1100, 1200 and 1300, or a contactless-only device, the antenna in the contactless device arrangement 1500, for receiving and transmitting RF signals, may be reduced into as small or compact a packaging as possible. In order to reduce the size of the antenna, while maintaining sufficient sensitivity and responsiveness (e.g. inductive coupling typically associated with a larger antenna, e.g., that is 3 to 5 times larger, or another size), embodiments of the invention may amplify or magnify the RF signals received in the antenna using a unique arrangement as disclosed in reference to Figs. **5A** and **5B**. Arrangement 1500 may include antenna windings 1504 preferably made of flat flexible conduits, wrapped around the outer side of ferrite core 1506. Antenna windings 1504 and ferrite core 1506 may be arranged as two concentric loops surrounding an electronics installation space 1508, the antenna loop exterior to the ferrite loop. The antenna may be composed preferably of a flat piece of ferrite formed to surround, almost fully around the electronics installation space 1508, as seen in the top view of Fig. **5B**. In the presence of a magnetic field, ferrite core 1506 becomes temporarily magnetized. When magnetized, the magnetic field near edges of ferrite core 1506 (at top and bottom of ferrite core 1506 as shown in Fig. **5A**) is increased. This may be visualized as channeling or concentrating lines of magnetic flux, as schematically illustrated by the dashed lines in Fig. **5A**. The ferrite element that is placed inside the windings of antenna 1504 may channel the RF field in the vicinity of arrangement 1500 to flow through ferrite element (or core) 1506 with a higher density than if there where no ferrite element and with a higher density than through the surrounding regions, due to the very low (e.g. approximately zero) magnetic reluctance to RF field in ferrite core 1506 compared with the much higher magnetic reluctance to RF field in the air.

Despite the small physical size of antenna 1504 (with area smaller by a factor of 3 to 5, or by another factor, relative to a coreless antenna of similar sensitivity), efficient coupling with an external NFC reader device may be provided by ferrite core 1506. For convenience, an antenna plane may be defined as the plane of Fig. 5A, which intersects the sides of ferrite core 1506 and antenna 1504 perpendicularly to the walls of (and substantially perpendicular to the lines of flux that flow through) ferrite core 1506. Due to its low magnetic reluctance relative to air and other non-ferromagnetic materials, ferrite core 1506 may channel lines of magnetic flux (e.g., as shown schematically as dashed lines in Fig. **5A**) that would, in the absence of ferrite core 1506, flow outside of the perimeter plane of antenna 1504, to flow within antenna 1504 (e.g., at the antenna plane). Thus, the density of the lines of magnetic flux within ferrite core 1506 (representative of the strength of the RF field) is greater than the density in the surrounding and enclosed regions. This increase in density of magnetic flux lines increases with increased height or width of ferrite core 1506. In this manner, the electrical voltage or current that is induced in antenna 1504 by changes in the magnetic flux (e.g., that are produced by an antenna of the external NFC reader device) may be similar or equal to the voltage or current that would be induced in a larger antenna that lacks a ferrite core.

Since ferrite core 1506 is hollow, further compactness of the user NFC device may be achieved. As used herein, a ferrite core is considered to be hollow when the ferrite core surrounds an interior space of the core that is empty of ferrite material, even if the space is fully or partially filled with other components or materials. The cross-sectional width of the ferrite core is substantially smaller (e.g., by a factor of about 1/10 to 1/1000) than the width of the hollow space it surrounds. However, the effectiveness of the hollow ferrite core in channeling magnetic flux may approach the effectiveness of a solid core of the same lateral dimensions. For example, the hollow ferrite core may effectively channel lines of magnetic flux originating from a region exterior to the hollow ferrite core that would otherwise (e.g., in the absence of a ferrite core) pass outside of antenna 1504 to flow through the walls of antenna 1504. On the other hand, lines of magnetic flux that would flow through the central portion of a solid (not hollow) ferrite core continue to flow through the hollow space within hollow ferrite core 1506. Therefore, removal of the ferrite from the interior space may not significantly affect the total flux of the RF field through antenna 1504, the magnetic coupling of antenna 1504 with the antenna of the NFC reader device.

Further reduction of the size of a user contactless device relative to arrangement 1500 may be achieved by replacing male components for communication of the contactless device with the personal device (e.g., in the form of a male jack plug) with a female audio jack (e.g., in place of headset jack 1404 in Fig. **4B**) or another similar connector. Other components used for communication with the personal device, such as a battery, and plug, may be located within an external device. Such a compact contactless user device may be worn or carried conveniently by a user, for example, on an article of clothing or accessory such as a bracelet, keychain or key ring, wrist band, lapel pin, necklace, garment, or otherwise. The user device may be removed or partially removed from the article of clothing or accessory (e.g., while maintaining a tethered connection to prevent dropping or loss of the user device) when used for contactless communication with an external contactless device.

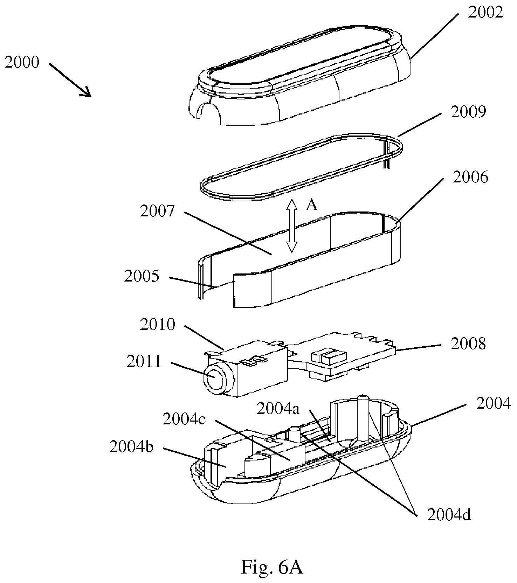

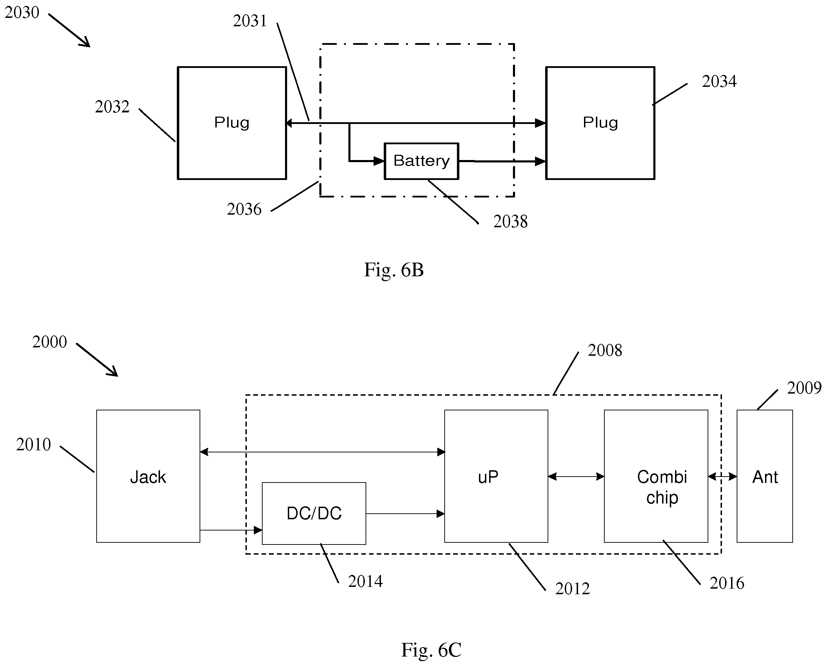

Fig. **6A** schematically illustrates an exploded view of a compact contactless device 2000 in accordance with an embodiment of the present invention. Fig. **6B** schematically illustrates components of a connection cable 2030 for connecting the compact contactless device 2000 shown in Fig. **6A** to a personal device (e.g., personal electronic device of Fig. 1A).

Compact contactless device 2000 may have dimensions that are typical of a USB flash drive (e.g., length in the range of 3 cm to 4 cm, width in the range of 1 cm to 2 cm, thickness less than 1 cm) or another size that enables convenient carrying. For example, compact contactless device 2000 may be configured to snap into a socket that is attached to a bracelet, wrist band, neck chain, brooch or pin, key chain, garment or may be otherwise carried.

Components of compact contactless device 2000 may be enclosed in a casing that includes a base 2004 and a cover 2002. Components of compact contactless device 2000 may be held in place by structure of base 2004 and cover 2002.

Circuit board 2008 includes various electronic components of compact contactless device 2000. Circuit board 2008 is connected to jack 2010. Jack 2010 may include a socket 2011 that opens to the exterior of compact contactless device 2000 and into which a compact device connector 2034 (e.g., a male audio jack) of connection cable 2030 may be inserted. For example, socket 2011 may include a socket of a standard headset or audio jack, a USB port, a telephone socket, or another type of wired socket, port or interface. A suitable compact device connector 2034 of connection cable 2030 may be inserted into socket 2011. Personal device connector 2032 (e.g., a male audio jack, or another type of plug or connector) at an opposite end of the cable connector may be inserted into a suitable socket, or connected to a mating connector, of a personal electronic device such as a smart phone, mobile phone, computer, or other device. Personal device connector 2032 may communicate with and is connected to compact device connector 2034 via cable 2031. Connection cable 2030 may include battery 2038 (e.g., within a cable circuit 2036 that is coupled to cable 2031, e.g., is spliced into cable 2031) or another power source, or other circuitry for powering components that enable communication between compact contactless device 2000 and the personal electronic device.

Alternatively or in addition, jack 2010 may include a male audio plug or another form of plug or male connector. In this case, compact device connector 2034 of connection cable 2030 may include a socket or other corresponding female connector.

Circuit board 2008 may be connected to antenna 2009 of compact contactless device 2000. (Antenna 2009, shown schematically in Fig. **6B****,** may be similar in shape and/or construction to antenna 1504 in Figs. **5A-5C**.) Although circuit board 2008 is shown as a single component, circuit board 2008 may represent a plurality of connected or intercommunicating components. Antenna 2009 may include one or more loops or a coil of a conducting wire or a flexible conductor that is wrapped partially or completely around, or partially or completely surrounds (e.g., concentrically), the perimeter of hollow core 2006 (e.g., electrically insulated from hollow core 2006). Hollow core 2006 includes a ferrite wall that at least partially surrounds hollow space 2007 (the ferrite wall may include an opening 2005, e.g., to enable socket 2011 to extend to the exterior of hollow core 2006). Antenna 2009 and hollow core 2006 may be arranged as concentric loops (e.g. having a common center) surrounding the non-ferrite opening 2005. Antenna and hollow core loops need not be circular or elliptical as shown in Fig. **6A****,** but may have any shape e.g. rectangular with curved edges as shown in Fig. **5B**. The loops may be full closed loops or partial loops with breaks. The ferrite wall may have dimensions that provide sufficient channeling of magnetic flux to enable contactless communication with the external NFC reader while enabling placement of components within hollow space 2007 on the one hand, while not being too heavy for convenient handling or use on the other hand. For example, when the dimensions of compact contactless device 2000 are as listed above, the width of the ferrite wall may be less than 1 cm (e.g., about 8 mm), and the thickness of the wall may be less than 1 mm (e.g., 0.5 mm). Other dimensions may be used, e.g., depending on an intended use.

Hollow space 2007 may be configured with a size and shape that enable hollow core 2006 to surround (laterally, in the plane of the loop of antenna 2009) all or part of components of compact contactless device 2000, such as circuit board 2008 and jack 2010. Thus, base 2004 and cover 2002 need only be large enough to surround and enclose hollow core 2006.

Antenna 2009 that surrounds (or, in some cases, mostly surrounds, may be interrupted by one or more openings 2005) hollow core 2006 may enable magnetic coupling with an external NFC reader device with an efficiency that approaches the coupling efficiency of a same or similarly sized and shaped antenna that surrounds a solid core (e.g., in which hollow space 2007 is entirely filled with ferrite material). The antenna may be configured to function most effectively when the magnetic flux that the antenna is to interact with is oriented approximately parallel to the direction A of the double-headed arrow in Fig. **6A** (substantially parallel to the walls of hollow core 2006 or, equivalently, substantially perpendicular to the plane of the loop of antenna 2009). Comparison with Fig. **5A** (e.g. where antenna ring 1504 corresponds to antenna 2009 and ferrite core 1506 corresponds to hollow core 2006) shows that a line of magnetic flux that lies outside the perimeter of antenna ring 1504 when far from (above or below in Fig. **5A**) ferrite core 1506 (e.g., which in the absence of hollow core 2006 would otherwise flow outside of antenna ring 1504 may be channeled by the (high permeability or magnetic susceptibility relative to air of the) walls of ferrite core 1506 to flow through the walls of ferrite core 1506 inside of antenna ring 1504 (and thus induce a voltage, and a resulting current, in antenna ring 1504 corresponding to antenna 2009). Magnetic flux lines (e.g., passing through electronics installation space 1508) interior to ferrite core 2006 and that would otherwise (e.g., in the absence of any ferrite core or in the presence of a solid ferrite core) pass through the interior of antenna ring 1504 may continue to pass through the interior of antenna ring 1504 without being channeled by the walls of ferrite core 1506. Thus, the magnetic flux that may induce a voltage in antenna 2009 may include all of the flux that would have otherwise (in the absence of a ferrite core) flowed through antenna 2009, as well as part of the peripheral flux that is channeled to pass through hollow core 2006. Since, with a solid core, most of the channeling would be accomplished by the outer regions of the core (whereas the interior does not significantly increase the magnetic flux through antenna 2009), an antenna 2009 the surrounds hollow core 2006 may have an efficiency that is sufficiently close to that of a solid core having the same or similar exterior dimensions such that removal of ferrite material from hollow space 2007 does not adversely affect performance. Embodiments of the invention may instead use hollow space 2007 for placement of other device components (e.g., circuit board 2008 and jack 2010), thereby reducing the overall size of the device without degrading the performance of its inductive coupling and contactless communication.

Antenna 2009 may enable near-field communication (NFC) with an external NFC reader device. An external NFC reader device may include a device that may be controlled by compact contactless device 2000 via NFC, or another device (e.g., an identification device such as a finger print sensor, iris or other camera, voice recognition microphone, heartbeat sensor, or another identification sensor or other device). Such NFC may be utilized in such applications as smart home management (e.g., alarm activation or deactivation), authentication (e.g., providing an electronic signature or secured login), automotive applications (e.g., ignition control, door lock control, fueling authorization), brand validation (e.g., luxury goods authentication), payment, or other applications.

A method for assembly of compact contactless device 2000, in accordance with an embodiment of the present invention, may be described with reference to Fig. **6B****.** Although various operations or steps of the assembly are described below in a particular order, it should be understood that, unless indicated otherwise, that the assembly operations or steps may be performed in another order, or concurrently with one another.

Base 2004 may be constructed of plastic or another suitable nonconductive material. For example, base 2004, or components of base 2004, made be formed by molding, extrusion, machining, or otherwise. Base 2004 includes various structures that are configured to hold internal components of compact contactless device 2000. Thus, compact contactless device 2000 may be assembled by placing the internal components into base 2004.

For example, circuit board 2008 may be placed in circuit board socket 2004a of base 2004 and may be held in place by engaging posts 2004d. Jack 2010 may be placed in jack socket 2004b such that jack 2010 is in electrical contact with circuit board 2008. For example, one or more electrical contacts of jack 2010 may be soldered or otherwise placed to enable current flow between the electrical contacts and corresponding electrical contacts of circuit board 2008. Hollow core 2006 may be placed in antenna slot 2004c such that circuit board 2008 and jack 2010 are within hollow space 2007 of hollow core 2006. Antenna 2009 may be placed in antenna slot 2004c outside of, and at least partially surrounding, hollow core 2006. Antenna 2009 may be electrically connected to one or more electrical contacts of circuit board 2008. In some cases, additional components (e.g., connectors, screws, clips, indicator lights, windows, or other electrical, electronic or mechanical components) may be placed in or on base 2004, or on another internal component of compact contactless device 2000. Finally, cover 2002 may be placed over the internal components of compact contactless device 2000 and attached to base 2004 (e.g., via one or more corresponding connectors) to form a closed case that encloses the internal components (e.g., including one or more of hollow core 2006, antenna 2009, circuit board 2008 and jack 2010). For example, cover 2002 may have structure (e.g., latches, lips, grooves, tabs, or other structure) that is configured to mechanically engage cooperating structure on base 2004 (or that may be screwed, glued, cemented, welded, or otherwise attached to base 2004). One or more sealant gaskets or other sealing structure may be placed between cover 2002 and base 2004 in order to seal against moisture or other environmental conditions.

In accordance with an embodiment of the present invention, a compact contactless device may be configured to operate without an internal or external power source. For example, any electrical power that is required for NFC or other contactless communication may be derived from electrical voltages and currents that are induced in the antenna that surrounds hollow core 2006. Other communication with a personal electronic device (e.g., for initializing, configuring, or personalizing compact contactless device 2000, e.g., by transferring funds to an account that may be debited when using compact contactless device 2000 in a transaction) may be achieved via a connection cable 2030 that connects to jack 2010.

Reference is made to Fig. **6C****,** which schematically illustrates components of a compact contactless device without an internal power source, in accordance with an embodiment of the present invention.

In embodiments where contactless device is a contact-contactless adapter, circuit board 2008 of compact contactless device 2000 may include contact/contactless smartcard chip ("combi chip") 2016 that is connected to antenna 2009 (surrounding hollow core 2006, not shown). Combi chip 2016 is configured to enable both contactless communication via antenna 2009 and wired communication with microprocessor 2012. In order to enable communication with a host controller on a personal device (e.g., a mobile phone) via jack 2010, combi chip 2016 communicates with microprocessor 2012. Microprocessor 2012 is connected to jack 2010 (some channels or wires may be connected via a DC-to-DC converter 2014). Power for operating components such as microprocessor 2012 may be provided by an external battery (e.g., battery 2038) or other power source that is incorporated into or connected to a connection cable 2030 that is configured to connect jack 2010 to the personal electronic device.

In order to prevent concurrent communication of combi-chip 2016 with personal electronic device via multiprocessor 2012 and an external NFC device via antenna 2009, a switch (such as switch 1230 in Fig. **2**) may be provided. The switch is controlled by multiprocessor 2012 such that multiprocessor 2012 may operate the switch to disconnect the combi-chip 2016 from antenna 2009 during communication with the personal device. Similarly, multiprocessor 2012 may operate the switch upon completion of communication with the personal device in order to enable contactless communication with an external NFC device. For example, a parallel switch may be closed to create a shunt to prevent an RF signal passage between combi-chip 2016 and antenna 2009, and opened to disconnect the shunt to enable the connection between combi-chip 2016 and antenna 2009. Alternatively, a series switch may be opened to disconnect combi-chip 2016 from antenna 2009, or closed to connect combi-chip 2016 to antenna 2009.

In some cases, a compact contactless device may be configured with enhanced circuitry to enable wireless contactless communication with a personal device or other enhanced capabilities.

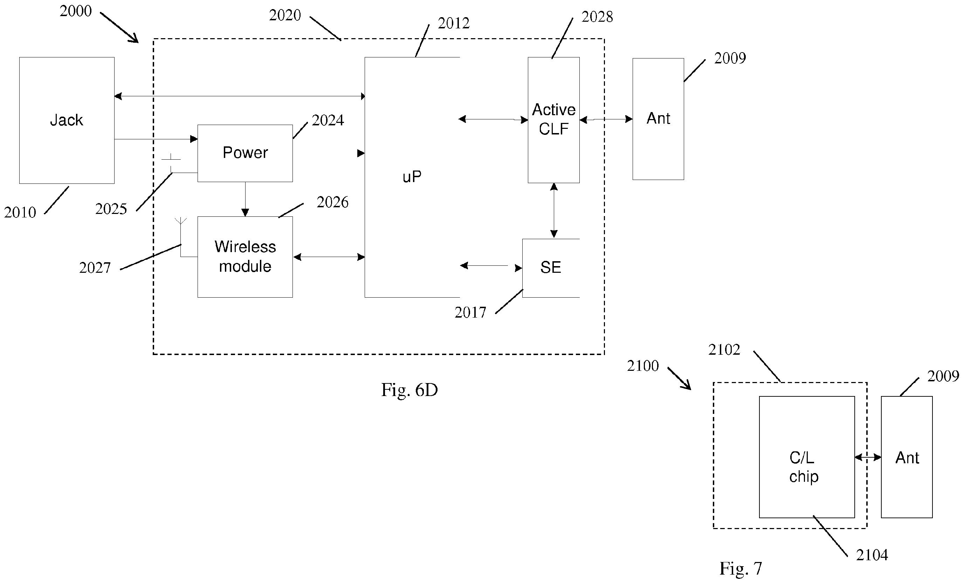

Reference is made to Fig. **6D****,** which schematically illustrates components of a compact contactless device with an internal power source, in accordance with an embodiment of the present invention.

Enhanced circuit board 2020 of compact contactless device 2000 includes internal power source 2024. For example, internal power source 2024 may include a battery 2025 (e.g., a rechargeable or non-rechargeable battery, or another power source, such as a photovoltaic cell) and any additional circuitry or components that are required to convert the produced electrical power to a form that is useable by other components of enhanced circuit board 2020.

For example, power source 2024 may power wireless module 2026 to enable communication with the personal electronic device via a wireless communications channel (e.g., via wireless communication antenna 2027). For example, the wireless communications channel may utilize Bluetooth low energy (BLE) technology.

Power source 2024 may enable wired communication with the personal device via jack 2010 using a simple cable (e.g., a standard headset headphone/microphone cable) that does not include a power source. For example, power source 2024 may be configured to sense a status of a connection to the personal device via jack 2010 (as indicated by the arrow from jack 2010 to power source 2024).

Power source 2024 may enable active NFC via antenna 2009. Active contactless frontend (CLF) 2028 may communicate with antenna 2009 under the control of microprocessor 2012 and utilizing secure data storing and processing provided by secure element (SE) 2017. Active CLF module 2028 may enable an increased operating distance between hollow-core antenna 2009 and an external NFC reader device. Microprocessor 2012 may communicate with active CLF module 2028 to check a status of communication with the external NFC reader device, or to automatically initiate or stop contactless communication with the external NFC reader device.

In accordance with an embodiment of the present invention, a compact device may be configured to be used solely for contactless communication with an external NFC reader device (e.g. the device does not support contact or wired communication). In one example, such a compact contactless-only device may be utilized to function similarly to a credit card or debit card. Therefore, there is no need to alter data or information that is stored in the device. In another example, updates to the device or its data may be made via contactless communication.

Fig. **7** schematically illustrates components of a compact contactless-only device, in accordance with an embodiment of the present invention.

Compact contactless-only device 2100 may be similar in form to compact contactless device 2000 as shown in Fig. **6A****,** without jack 2010, or any wired port (e.g. USB). Thus, an overall size of compact contactless-only device 2100 may be smaller than that of compact contactless device 2000. In some cases, a size of compact contactless-only device 2100 may be similar to that of compact contactless device 2000, e.g., to facilitate handling or to prevent loss of compact contactless-only device 2100.

Circuitry 2102 (e.g., on circuit board 2008 within hollow core 2006) may include contactless communication chip 2104. Contactless communication chip 2104 may be configured to enable contactless communication only (and not wired communication with an external device). For example, contactless communication chip 2104 may be configured to communicate with an external NFC reader device using NFC via antenna 2009. Circuitry 2102 may thus be completely passive, requiring no power source (other than currents or potentials that are induced by NFC fields that are produced by the external NFC reader device). In some embodiments, no programming or other modification of circuitry 2102 may be allowed after manufacture of compact contactless-only device 2100 or circuitry 2102. Alternatively, programming of circuitry 2102 may be achieved via contactless communication.

While certain features of the invention have been illustrated and described herein, many modifications, substitutions, changes, and equivalents will now occur to those of ordinary skill in the art. It is, therefore, to be understood that the appended claims are intended to cover all such modifications and changes.

## Claims

1. A contactless user device for contactless communication with an external reader device, the contactless user device comprising:
an antenna loop that at least partially surrounds a hollow ferrite core, the hollow core including a ferrite wall that at least partially surrounds a space without ferrite; and
a circuit board that is located within the space, the circuit board including a contactless chip that is configured for contactless communication with the external reader device via the antenna loop.

2. The user device of claim 1, wherein the contactless user device is a contactless-only device and the contactless chip comprises a contactless-only chip that only enables contactless communication.

3. The user device of claim 1 or 2 wherein the contactless user device is a contactless and contact device, the contactless chip comprising a combination contact/contactless chip that enables both contact and contactless communication with external devices.

4. The user device of claim 3, comprising a jack configured to enable a wired connection between the user device and a personal electronic device.

5. The user device of claim 4, further comprising a connection cable for connecting to the jack and to the personal electronic device, the connection cable including a battery.

6. The user device of any preceding claim, wherein the antenna is substantially concentric with the hollow ferrite core.

7. The user device of any preceding claim, wherein the contactless chip comprises an active contactless front-end module to enable active near-field communication with the external device.

8. A method for assembling a user device for contactless communication with an external device, the method comprising:
placing in a base of the user device a hollow ferrite core and an antenna such that the antenna at least partially surrounds the ferrite core;
placing in the base within a space within the hollow core a circuit board, the circuit board including a contactless only chip or a contact/contactless smartcard (combi) chip and a microprocessor; and
placing a cover on the base so as to form a case that encloses the ferrite core, the antenna and the circuit board.

9. The method of claim 8, further comprising placing a jack in the base within the space within the hollow core.

10. A method for contactless communication with an external reader device, the method comprising:
placing an antenna loop of a user device such that radio frequency magnetic flux that is generated by the external reader device induces an electrical voltage in the antenna loop, the antenna loop at least partially surrounding a hollow ferrite core, the hollow core including a ferrite wall that at least partially surrounds a space without ferrite, a circuit board that is located within the space including a contactless chip.

11. The method of claim 10, wherein the contactless chip comprises a contactless-only chip.

12. The method of claim 10, wherein the contactless chip comprises a combination contact/contactless chip that enables both contact and contactless communication with external devices.

13. The method of claim 12, further comprising connecting a personal electronic device via a connection cable to a jack of the user device.

14. The method of claim 13, further comprising operating an active contactless front-end module of the user device to actively communicate with the external device.

15. The method of any of claims 10 to 14, further comprising operating the user device to communicate with a personal electronic device via Bluetooth low energy communication.
